(19) Europäisches Patentamt

European Patent Office

Office européen des brevets

(11) Veröffentlichungsnummer: **0 614 264 A1**

(12) **EUROPÄISCHE PATENTANMELDUNG**

(21) Anmeldenummer: **94103139.5**

(22) Anmeldetag: **02.03.94**

(51) Int. Cl.⁵: **H02K 29/06**

(30) Priorität: **05.03.93 SI 9300106**

(43) Veröffentlichungstag der Anmeldung:
**07.09.94 Patentblatt 94/36**

(84) Benannte Vertragsstaaten:
**DE FR GB IT**

(71) Anmelder: **EKM, d.d.**
**Djakoviceva 36**
**SI-61000 Ljubljana (SI)**

(72) Erfinder: **Renar, Florijan**
**Brilejeva 3**
**SI-61000 Ljubljana (SI)**
Erfinder: **Gaser, Mirko**
**Trnje 24**
**SI-64228 Zeleznik (SI)**

(74) Vertreter: **Hanke, Hilmar et al**
**Patentanwälte Köster & Hanke,**
**Leopoldstrasse 77**
**D-80802 München (DE)**

(54) **Elektronisch kommutierter Elektromotor mit hoher spezifischer Leistung und hohem Wirkungsgrad.**

㉗ Erfindungsgegenstand ist ein elektronisch kommutierter Elektromotor mit hoher Leistung und hohem Wirkungsgrad, welcher aus einer solchen Konstruktion besteht, die ein konstantes Verhältnis zwischen der Polanzahl und dem Rotordurchmesser ermöglicht, und der entsprechenden Steuerelektronik. Der Elektromotor allein kann in einer Konstruktionslösung mit Außen- oder Innenläufer gebaut werden.

Die Grundkonstruktionsidee des Elektromotors geht aus dem Schluß hervor, daß ein optimales ständiges Verhältnis zwischen der Polanzahl und dem Rotordurchmesser besteht:

**Polanzahl/Rotordurchmesser D (cm) = 0.6 bis 2.0**

Die exakte Auswahl der Werte des Verhältnisses zwischen der Polanzahl und dem Rotordurchmesser hängt von der Art der Dauermagnete bzw. der magnetischen Flußdichte Br, Rotoreinbau (Innen- oder Außenläufer) und der maximalen Drehzahl des Rotors (3) ab. Die Statorpole gleichen einander und auch die Rotorpole gleichen einander. Beim Stator (2) des Einphasen-Elektromotors ist die Zahl der Statorpole gleich der Zahl der Rotorpole, bei Mehrphasen-Elektromotoren mit einem Stator ist die Zahl der Statorpole um mindestens zwei kleiner als die Zahl der Rotorpole.

FIG. 1

Gegenstand der Erfindung ist ein elektronisch kommutierter Elektromotor mit hoher Leistung und hohem Wirkungsgrad, welcher aus einer solcher Konstruktion, die ein konstantes Verhältnis zwischen der Polanzahl und Rotordurchmesser ermöglicht, und einer entsprechenden Steuerelektronik besteht. Der Elektromotor allein kann, was die Konstruktionslösung betrifft, mit Außen- oder Innenläufer gebaut werden. Der erfindungsmäßige elektronisch kommutierte Elektromotor deckt einen weiten Bereich von Leistungen und Drehzahlen und ermöglicht eine stufenlose Drehzahlregelung für die Bereiche sowohl einfacher als auch anspruchsvoller regelbarer Antriebe. Die Konstruktion des Elektromotors kann, was die Form und Dimensionen betrifft, den Anforderungen verschiedener Antriebe angepasst werden. Ähnliches gilt für die Steuerelektronik, deren Lösung spezifischen Regelungsansprüchen verschiedener Anwendungen angepasst werden kann. Die Erfindung kann in die Klasse H 02 K 29/00 der internationalen Patentklassifikation eingereiht werden.

Das durch die vorliegende Erfindung gelöste technische Problem ist eine solche Konstruktion und Ausführung eines elektronisch kommutierten Elektromotors, die die Lösung folgender technischer Probleme ermöglicht, wie große Ausnutzung der aktiven Materials des Elektromotors, wodurch eine hohe spezifische Leistung des Elektromotors gewährleistet ist, einfache Produktionstechnologie des Elektromotors, den Gebrauch von unanspruchsvollen Formen und ähnlichen Magnetdimensionen, ungeachtet der Elektromotorgröße, Verwendung von Ferritmagneten für die Elektromotoren größerer Leistungen, einfacher und zuverlässiger Einbau von Magneten, einfaches Statorwickeln, ähnliche Wickeltechnologie ohne Rücksicht auf Netzspannung und Elektromotorgröße, präzise Drehzahlregelung ohne zusätzliche Sensoren im weiten Drehzahlbereich, Unempfindlichkeit auf die Entmagnetisierung von Magneten beim Kurzschluß der Statorwicklung, die Kommutationselektronik darf die möglichen Charakteristiken des Elektromotors nicht beschränken, die einfache Anpassung der Steuerelektronik den Ansprüchen verschiedener Anwendungen, hoher Wirkungsgrad des Elektromotors und der Steuerelektronik.

Der erfindungsmäßige elektronisch kommutierte Elektromotor deckt in erster Linie den Bereich von regelbaren Antrieben in verschiedenen Anwendungen. Auf diesem Gebiet werden heutzutage vor allem folgende Elektromotoren verwendet: Asynchronmotoren mit Frequenzregelung, reihenschlußerregte Kollektormotoren, Gleichstrom-Kollektormotoren mit Dauermagneten, elektronisch kommutierte Dreiphasen-Elektromotoren (Servomotoren) und elektronisch kommutierte Einphasen-Elektromotoren.

Ein Asynchronmotor mit Frequenzregelung besteht aus einem regelbaren Antrieb mit kostengünstigem Elektromotor und einer verhältnismäßig teueren Frequenzregelung. Als Einphasen-Elektromotor und als Elektromotor für kleine Leistungen ist sein Wirkungsgrad sehr klein, vor allem bei niedrigen Drehzahlen. Im Bereich des Nennmoments muß er bei kleinen Drehzahlen noch zusätzlich gekühlt werden. Der Frequenzumrichter zur präzisen Drehzahlregelung ist kostenungünstig und technisch anspruchsvoll (Vektorregelung und Drehzahlsensor). Die Herstellungstechnologie des Elektromotors ist sehr kompliziert wegen kleiner Spalte, Wickeln, Gießen des Rotors und notwendiger Zwischenphasenisolation bei hohen Spannungen.

Reihenschlußerregte Kollektormotoren haben eine einfache Regelung, eine begrenzte Lebensdauer wegen Bürsten- und Kollektorverschleiß, was besonders bei hohen Drehzahlen auftritt. Der Elektromotor muß regelmäßig gewartet werden. Die Möglichkeit, daß der Rotor durchbrennt, ist sehr groß. Die Herstellungstechnologie des Rotors ist besonders bei größeren Elektromotoren anspruchsvoll.

Gleichstrom-Kollektormotoren mit Dauermagneten haben eine einfache Regelung, hohen Wirkungsgrad, begrenzte Lebensdauer wegen Bürsten- und Kollektorverschleiß, vor allem bei hohen Drehzahlen. Der Elektromotor muß regelmäßig gewartet werden. Es besteht eine große Möglichkeit, daß der Rotor durchbrennt und daß es zur Entmagnetisierung kommt. Die Herstellungstechnologie des Rotors ist besonders bei größeren Elektromotoren anspruchsvoll.

Elektronisch kommutierte Dreiphasen-Elektromotoren (Servomotoren) haben einen guten Wirkungsgrad und eine lange Lebensdauer, als Servomotoren verwendet haben sie eine präzise Drehzahlregelung und große Dynamik und laufen sehr leise. Als Servomotoren sind sie sehr teuer. Bei wenig anspruchsvoller Drehzahlregelung werden verschiedene Ausführungen von elektronisch kommutierten Elektromotoren kleinerer Leistungen verwendet.

Elektronisch kommutierte Einphasen-Elektromotoren sind vor allem gedacht für niedrige Spannungen, kleine Leistungen und für die Anwendungen, in denen ein kleiner Anlaufdrehmoment nötig ist.

Der erfindungsmäßige elektronisch kommutierte Elektromotor mit hoher spezifischen Leistung und hohem Wirkungsgrad wird genauer erläutert auf Grund eines Ausführungsbeispiels und folgender Zeichnungen, von welchen zeigen:

**Fig. 1**    Stator und Rotor des elektronisch kommutierten Elektromotors im Querschnitt

**Fig. 2a**    Schrägspalte zwischen Rotor- und Statorpol

Fig. 2b    Diagramm des Reluktanzmoments des Einphasen-Elektromotors mit Schrägspalte

Fig. 3a    Wickeln mehrerer Wicklungen in Höhenrichtung des Poles

Fig. 3b    Getrenntes Wickeln einzelner Pole

Fig. 4a    Mögliche Anschlußweisen einzelner Wicklungen beim Wickeln in Höhenrichtung des Poles

Fig. 4b    Mögliche Anschlußweisen einzelner Wicklungen beim Wickeln einzelner Pole

Fig. 5a    Elektromotor mit Außenläufer mit mehreren Statorpaketen

Fig. 5b    Elektromotor mit Innenläufer mit mehreren Statorpaketen

Fig. 6    Dreiphasen-Elektromotor mit Innenläufer

Fig. 7    Kommutierungselektronik

Fig. 8a    Generatorspannung des Elektromotors bei der rechten Drehrichtung

Fig. 8b    Sondesignale des Elektromotors bei der rechten Drehrichtung

Fig. 8c    Einschaltungssequenz bei der rechten Drehrichtung

Fig. 9a    Generatorspannung des Elektromotors bei der linken Drehrichtung

Fig. 9b    Sondesignale des Elektromotors bei der linken Drehrichtung

Fig. 9c    Einschaltungssequenz bei der linken Drehrichtung

Fig. 10    Schaltung zur Drehzahlregelung und Stromregelung in Abhängigkeit von der Drehzahl des Elektromotors und zur Geräuschesenkung

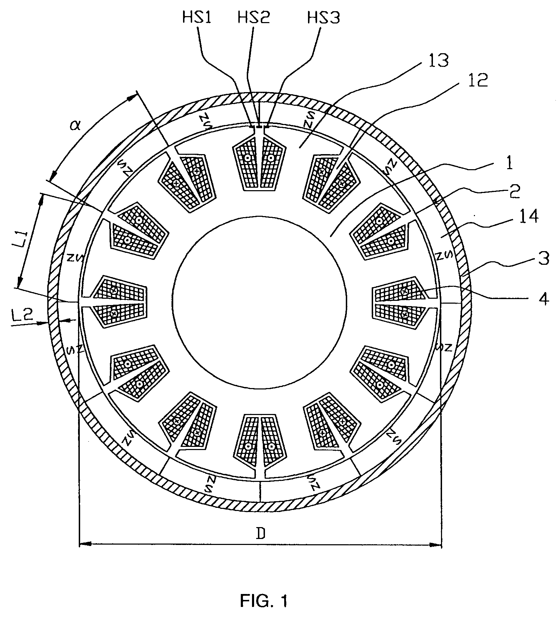

Fig. 1 stellt ein Beispiel des zwölfpoligen Einphasen-Elektromotors mit 3 Sonden und Außenläufer. Der Elektromotor kann einen Innenläufer haben. Die Polanzahl des erfindungsmäßigen Elektromotors kann größer oder kleiner sein als die des dargestellten Beispiels. Der Elektromotor kann nur zwei Sonden - HS1, HS2 oder HS2, HS3 - zum Drehen in eine Richtung haben. Gemäß Fig. 1 wird der Elektromotor aus folgenden Teilen gebaut: Stator 1, Magnetringe 2, Rotorringe 3, Statorwicklungen 4 und Sonden HS1, HS2 und HS3.

Die Grundkonstruktionsidee des Elektromotors geht aus dem Schluß hervor, daß zwischen der Polanzahl und dem Rotordurchmesser ein optimales konstantes Verhältnis besteht:

**Polanzahl/Rotordurchmesser D (cm) = 0.6 bis 2.0**

Die genaue Wahl der Verhältniswerte zwischen der Polanzahl und dem Rotordurchmesser hangt von Art des Dauermagnetes bzw. magnetischen Flußdichte Br, Rotorposition (Innen- oder Außenläufer) und der maximalen Drehzahl des Rotors ab. Die Statorpole sind untereinander gleich und auch die Rotorpole sind untereinander gleich. Beim Stator des EinphasenElektromotors sind die Zahl der Statorpole und die Zahl der Rotorpole gleich, bei Mehrphasen-Elektromotoren mit einem Stator ist aber die Zahl der Statorpole um mindestens zwei kleiner als die Zahl der Rotorpole.

Das o.a. Verhältnis zwischen der Polanzahl und dem Rotordurchmesser hat wesentliche Vorteile. Man kann etwa gleiche Dimensionen der Magnetsegmente verwenden ohne Rücksicht auf die Elektromotorgröße, so daß man mit kleinen Segmenten auch Elektromotoren sehr großer Leistungen herstellen kann. Bei konventionellen Elektromotoren werden mit größeren Motorleistungen auch die Magnetsegmente in die Breite und Dicke vergrößert, deswegen können sie für größere Leistungen nicht verwendet werden. Dies gilt besonders für Ferritmagnete. Mit dem Gebrauch von ungefähr gleichen Größen der Magnetsegmente für die Elektromotoren verschiedener Größen können aus einer Basisdimension des Segmentes die Magnetsegmente für verschiedene Elektromotorgrößen hergestellt werden, was eine starke Reduzierung von Produktionskosten der Magnetsegmente zur Folge hat.

Mit der Steigerung der Elektromotorgröße vergrößert sich bei konventionellen Elektromotoren auch die Dicke des Rotorringes 3 gemäß Fig. 1. Bei erfindungsmäßigem Elektromotor kann die Dicke des Rotorringes gleich bleiben, ungeachtet der Elektromotorgröße.

Wegen kleiner Dicke des Rotorringes und der Magnetsegmente wird viel Material eingespart, der Trägheitsmoment des Rotors und der Elektromotordurchmesser werden kleiner, was einen äußerst ausgeprägten Vorteil bei der Konstruktion des Außenläufermotors bringt. Mit solcher Konstruktion kann man mittels gleicher Technologie die Elektromotoren von sehr großen Leistungen herstellen.

Der erfindungsmäßige Elektromotor hat einige Vorteile vor bestehenden Lösungen auch beim Gebrauch von Magneten aus seltenen Erden. Bei vorhandenen Lösungen besteht bei größeren Elektromotoren ein Rotorpol aus mehreren Magnetsegmenten. Das Magnetfeld des Rotorfeldes ist deshalb nicht homogen. Der erfindungsmäßige Elektromotor kann jedoch ohne Rücksicht auf die Elektromotorgröße nur ein Segment pro Pol haben. Außerdem kann man etwa gleiche Segmentgröße verwenden ohne Rücksicht auf den Durchmesser des Rotors des Elektromotors.

Der Stator des erfindungsmäßigen Elektromotors besteht aus Lamellen aus magnetisch leitendem Blech. Die Ausführung des Stators mit einer großen Polanzahl im Vergleich zu Statordurchmesser ermöglicht ein günstiges Verhältnis zwischen der Polbreite und den Raum für die Wicklung und ein relativ großes inneres Loch bei der Elektromotorausführung mit Außenläufer gemäß Fig. 1, was den Gebrauch von ziemlich großen Kugellagern ermöglicht. Mit Hinsicht auf die Größe des Elektromotordurchmessers ermöglicht die große Polanzahl, große spezifische Leistungen zu erlangen.

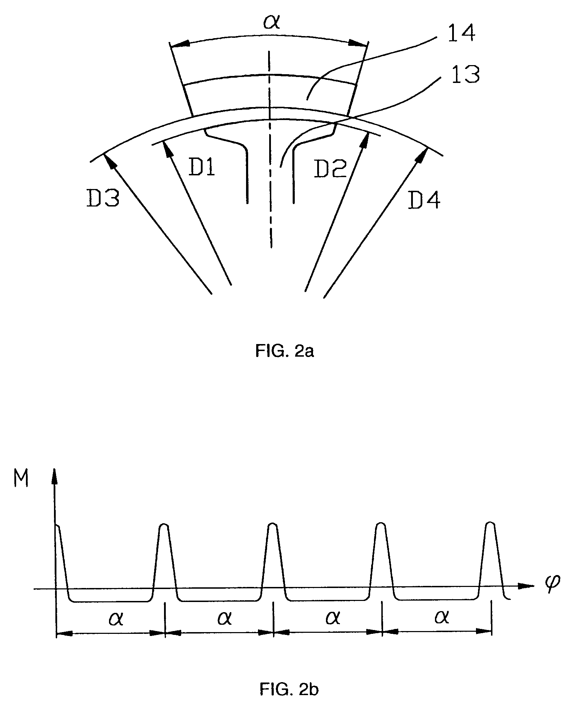

Aufgrund großer Polanzahl und dünner Magneten kann man bei kleiner Schrägheit des Statorpols - D2 ist größer als D1 oder umgekehrt, wie gemäß Fig. 2a dargestellt - einen großen Reluktanzmoment erreichen, gemäß Fig. 2b, im Bereich des gesenkten elektrischen Drehmoments in neutraler Lage, wenn der Statorpol sich genau unter dem Rotorpol befindet. Zugleich ist der Bereich des gesenkten Drehmoments sehr eng im Vergleich zu Elektromotoren mit kleiner Polanzahl. Der

Einphasen-Elektromotor erreicht darum einen relativ hohen Anlaufdrehmoment und deckt einen weiten Bereich von Anwendungen.

Die Größe des Reluktanzmoments kann mit der Änderung der Schrägheit des Statorpols und/oder Kombination der Statorpole, wo D2 größer ist als D1, und der Statorpole, wo D2 und D1 gleich sind, verändert werden.

Die große Polanzahl und damit die engen Bereiche, wo es theoretisch keinen Drehmoment gibt, ermöglichen uns auch beim Stator mit konstanter Spalte einen zuverlässigen Start in den Anwendungen mit kleinem Reibungsmoment und großem Anlaufdrehmoment, z.B. bei Waschmaschinen. Der Elektromotor kann gleiche Betriebscharakteristiken in beiden Drehrichtungen besitzen.

Bei Statorspulen des erfindungsmäßigen Elektromotors sind die Wickelnwege wegen großer Polanzahl kürzer, jeder Pol hat wenigere Wicklungen und die Spulenköpfe sind kürzer. Auf diese Weise bekommt man einen kürzeren Elektromotor und einen kleineren Wicklungswiderstand, was zu einem besseren Wirkungsgrad des Elektromotors beiträgt.

Wegen großer Polanzahl im Vergleich zum Statordurchmesser können die Wicklungsnuten so gestaltet werden, daß eine niedrige magnetische Flußdichte in den Statorpolen erreicht werden kann, wobei genug Raum für die Wicklung übrigbleibt. Die Folge niedriger magnetischer Flußdichte in den Statorpolen sind kleine Hysteresisverluste, deswegen sind die Elektromotorcharakteristiken gut auch bei sehr hohen Drehzahlen.

Große Polanzahl senkt die Zahl der Wicklungen pro Pol, deswegen ist die Entmagnetisierung der Magnetsegmente praktisch unmöglich.

Bei Einphasen-Elektromotoren wird in den Nuten die Statorwicklung mit solcher Wickelnrichtung eingebaut, daß beim Anschluß der Wicklung an die Gleichspannung jeder Nachbarpol gegenseitig polarisiert ist. Bei MehrphasenElektromotoren gilt dies für jede einzelne Phase.

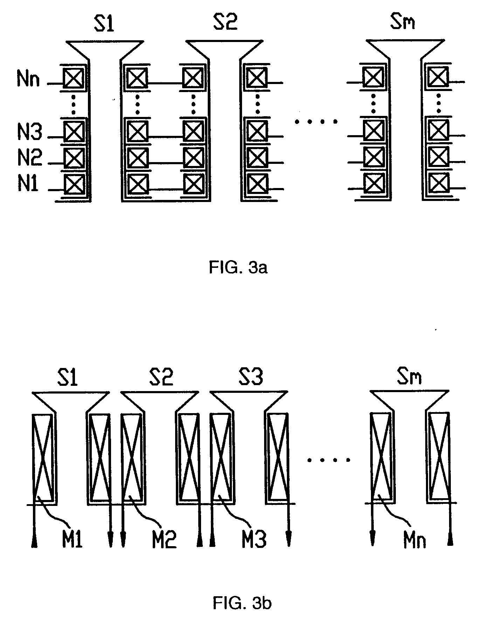

Elektromotoren für große Leistungen, Elektromotoren für hohe Drehzahlen und Elektromotoren für niedrige Spannungen verlangen einen dickeren Draht für die Wicklung. Für Maschinenwickeln ist das Wickeln eines dickeren Drahtes wie auch paralleles Wickeln mehrerer dünner Drähte technisch sehr anspruchsvoll, deshalb kann in solchen Fällen das technische Problem des Wickelns so gelöst werden, daß mehrere Wicklungen in die Höherichtung des Poles, gemäß Fig. 3a, angeordnet werden, wo n für die ganzen und m für gerade Zahlen steht, oder daß jede Polengruppe oder jeder Pol getrennt gewickelt wird, gemäß Fig. 3b, wo n und m für gerade Zahlen stehen, oder daß man mit der Kombination beider vorher genannten Varianten wickelt.

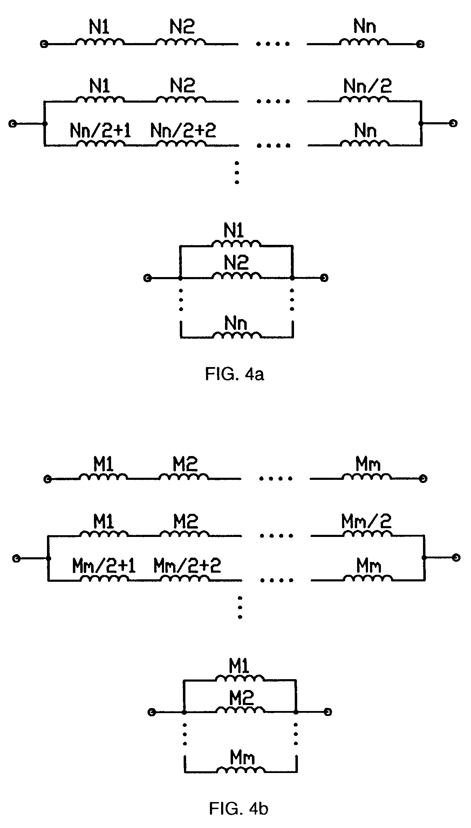

Mit parallel oder in der Reihe angeschlossenen Wicklungen gemäß Fig. 4a bzw. 4b bekommt man verschiedene Drehmomentkonstanten (Nm/A) von Elektromotoren. Solche Wicklung ist besonders geeignet für die Anwendungen, wo ein großer Drehmoment bei niedrigen Drehzahlen und hohe maximale Drehzahlen mit einem kleinerem Drehmoment verlangt werden. Der gleiche Elektromotor kann mit der Wicklungumschaltung mit zwei oder mehreren Drehmomentkonstanten funktionieren, womit der Anspruch auf den minimalen Nennstrom optimiert wird.

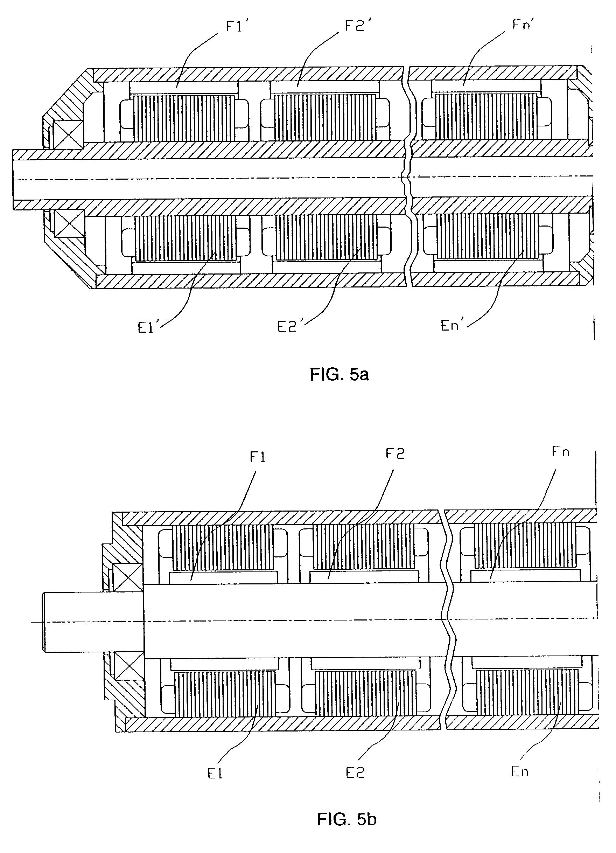

Bei sehr langen Elektromotoren mit Außen- oder Innenläufer, wo das Maschinenwickeln technisch außerordentlich anspruchsvoll wäre, ermöglicht die vorhandene Konstruktion mit kurzen Wicklungsköpfen die Herstellung eines Elektromotors mit mehreren Statorpaketen mit Außenläufer, gemäß Fig. 5a, oder Innenläufer, gemäß Fig. 5b. Die Wicklungen der Statorpakete können in der Reihe oder parallel angeschlossen werden oder mit der Kombination beider Anschlußweisen. Mit der gegenseitigen Versetzung von Statoren oder Rotorringen bekommt man einen Zwei- oder Mehrphasen-Elektromotor, dessen Generatorspannungen versetzt werden. Jede Statorwicklung wird in diesem Fall an ihre eigene H-Brücke angeschlossen.

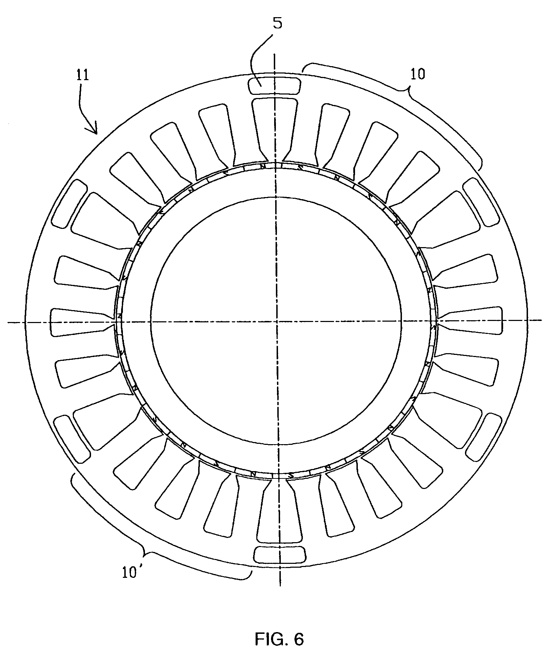

Bei Anwendungen, wo bei niedriger Drehzahl ein großer Drehmoment verlangt wird, ermöglicht die vorhandene Lösung des Elektromotors die Herstellung eines kurzen Elektromotors mit einem Stator und größerem Durchmesser. Der Elektromotor kann mit Außen- oder Innenläufer in Zwei- oder Mehrphasen-Ausführung hergestellt werden. Auf der Fig. 6 wird ein Beispiel des Dreiphasen-Elektromotors mit Innenläufer dargestellt, der einen 26-poligen Rotor und einen Stator mit drei Phasen besitzt, von denen jede 8 Pole hat. Die Statorlamelle hat zwischen einzelnen Phasen einen verkleinerten Durchschnitt mit Loch 5 oder andere Ausschnittformen. Damit wird der gegenseitige Einfluß einer Phase auf die andere reduziert. Die Zahl der Rotorpole ist um mindestens zwei größer als die Zahl der Statorpole. Einzelne Phasen müssen symmetrisch sein, wie Beispiel der Phase 10, 10' zeigt, gemäß Fig. 6. Für jede Phase kann man drei Sonden haben und jede Phase wird an ihre eigene H-Brücke angeschlossen. Auf diese Weise behält jede Phase die Vorteile des Einphasen-Elektromotors und kann in verschiedenen Regimen funktionieren, welche in folgendem Text dargestellt werden. Diese Vorteile besitzt auch die Konstruktion des Mehrphasen-Elektromotors gemäß Fig. 5a und 5b.

Die Dreiphasen-Ausführung von Elektromotoren gemäß Fig. 5a, 5b und Beispiel auf der Fig. 6 kann mit der klassischen Dreiphasen-Steuerelektronik mit 6 Leistungtransistoren gesteuert werden. Bei dieser Ausführung erlangt man bei höheren Drehzahlen schlechtere Charakteristiken als bei der Ausführung, bei welcher jede Phase an ihre eigene H-Brücke angeschlossen ist.

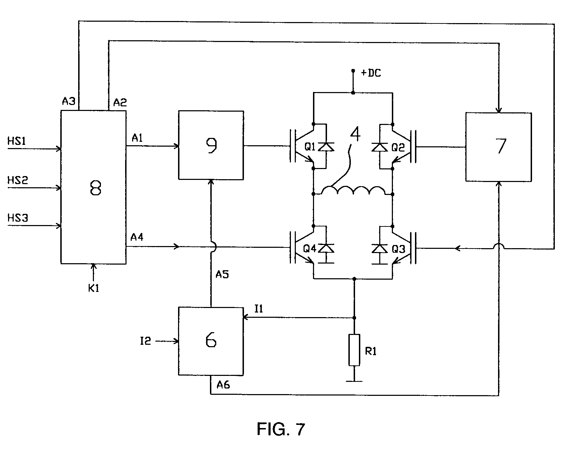

Fig. 7 stellt den Kommutierungsteil der Steuerelektronik für die Steuerung des Einphasen-Elektromotors dar. Bei Mehrphasen-Elektromotoren wird jedoch für jede Phase ein eigener Kommutierungsteil der Steuerelektronik gebraucht.

Die Kommutierungselektronik gemäß Fig. 7 besteht aus vier Transistoren Q1, Q2, Q3 und Q4, die eine H-Brücke bilden, an welche die Statorwicklung 4 angeschlossen ist, Kommutierungslogik 8, welche mit Hinsicht auf die Sondesignalen im Elektromotor das entsprechende Transistorpaar steuert und damit die Stromrichtung in der Wicklung bestimmt, Schaltung zur Stromregelung 6 und Schaltungen zur galvanisch getrennten Steuerung der o.a. Transistoren 7 und 9.

Im Unterschied zu der üblichen Drehzahl- bzw. Stromregelung mit Pulsenweitemodulation wird die Stromregelung mit Hysterese verwendet, was eine optimale Ausnutzung des Elektromotors und der Elektronik, einfache Drehmomenteinstellung und einfache spezifische Lösungen für einzelne Anwendungen gewährleistet.

Der erfindungsmäßige Elektromotor hat eine große Polanzahl, deshalb ist es nötig, bei hohen Drehzahlen sehr oft und schnell die Stromrichtung in der Wicklung umzuschalten. Da auch bei Mehrphasen-Elektromotoren jede Wicklung an ihre eigene H-Brücke angeschlossen ist, kann man mit entsprechendem Einbau der Sonden die Stromrichtung in der Wicklung in den optimalen Punkten umschalten. Die Umschaltungspunkte zum Drehen des Elektromotors in beiden Richtungen sind mit Sondenausgänge HS1, HS2 und HS3 deffiniert, von denen sich eine Sonde in neutraler Lage, eine links von neutraler Lage und die dritte rechts von neutraler Lage befindet. Mit solcher Umschaltungsweise und Stromregelung mit Hysterese kann man praktisch eine rechteckige Form und einen großen Strom erzielen auch bei Drehzahlen, wenn die Generatorspannung fast so groß wie die Zwischenkreisspannung ist. Bei kleinerem Strom kann die Generatorspannung sogar höher als die Zwischenkreisspannung sein.

Die Schaltung der Kommutierungslogik 8 auf der Fig. 7 dient zur Sequenzbestimmung für die linke oder rechte Drehrichtung des Elektromotors mittels Signale aus den Sonden HS1, HS2 und HS3, die beim Drehen des Elektromotors auftreten. Die Schaltung kann mit verschiedenen Sequenzen der Ausgangsignale funktionieren, die an verschiedene Betriebsregime des Elektromotors angepasst werden.

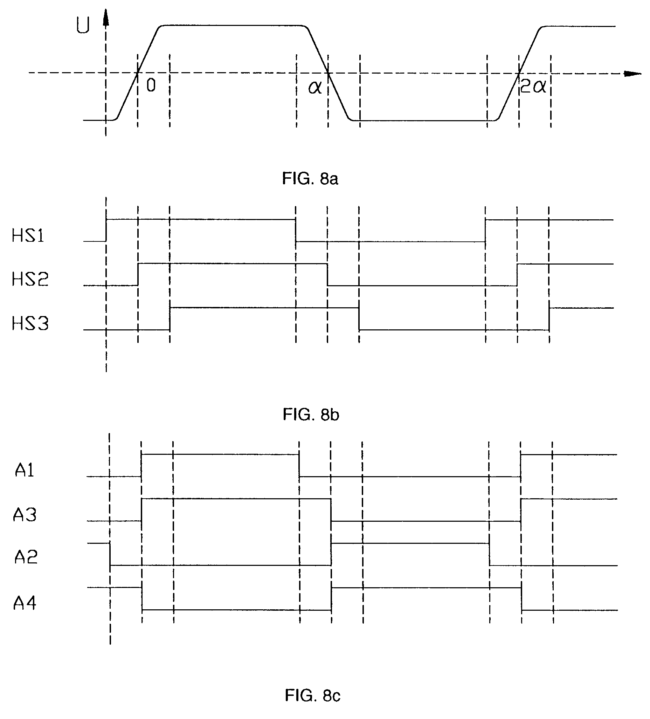

Auf der Fig. 8a wird die Generatorspannung des Elektromotors bei der rechten Drehrichtung, auf der Fig. 8b die Ausgangsignale aus den Sonden bei der rechten Drehrichtung des Elektromotors und auf der Fig. 8c der Gang der Ausgangsignale der Schaltung 8 bei der rechten Drehrichtung dargestellt.

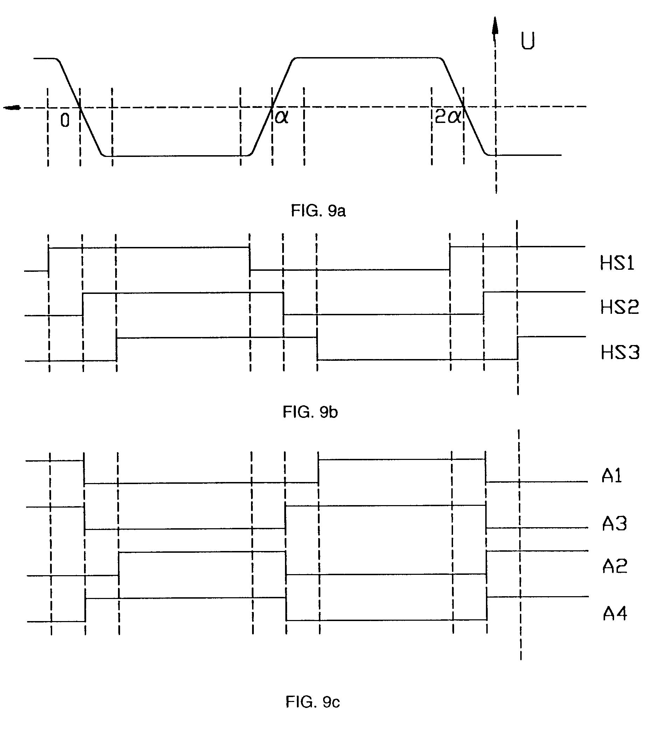

Auf der Fig. 9a wird die Generatorspannung des Elektromotors bei der linken Drehrichtung, auf der Fig. 9b die Ausgangsignale aus den Sonden bei der linken Drehrichtung des Elektromotors und auf der Fig. 9c der Gang der Ausgangsignale der Schaltung 8 bei der linken Drehrichtung.

Mit dem Gebrauch der Sonden HS1, HS2 und HS3, von denen die Sonde HS2 in der Mitte zwischen Statorpole, die Sonde HS1 links von der Sonde HS2 und die Sonde HS3 rechts von der Sonde HS2 steht, und mit der Sequenz der Ausgangsignale gemäß Fig. 8c und 9c können gleiche und gute Betriebscharakteristiken des Elektromotors in beiden Drehrichtungen erreicht werden.

Beim Drehen des Elektromotors in eine Richtung verwendet man bei der rechten Drehrichtung die Sonden HS1 und HS2 und bei der linken Drehrichtung die Sonden HS3 und HS2. Mit der Versetzung der Sonde HS2 aus der Mitte zwischen Statorpole zur Sonde HS1 für die rechte Drehrichtung bzw. mit der Versetzung der Sonde HS2 aus der Mitte zwischen Statorpole zur Sonde HS3 für die linke Drehrichtung kann man bei demselben Elektromotor einen höheren Drehmoment bei hohen Drehzahlen und eine höhere maximale Drehzahl erreichen.

Die Schaltung 6 zur Stromregelung auf der Fig. 7 regelt den Strom mit Hysterese. Die Schaltung 6 vergleicht den Signalwert der Stromgröße in der Statorwicklung I1, welcher durch Widerstand R1 mit eingestelltem Strom-Sollwert I2 vermittelt wird. Solange der Wert I1 kleiner als der Wert I2 ist, hat die Schaltung 6 keinen Einfluß auf 9 und 7, wenn aber der Signalwert I1 den Wert I2 erreicht, schaltet die Schaltung 6 über Ausgänge A5 und A6 und über die Schaltungen 9 und 7 den Transistor Q1 bzw. Q2 aus. Wenn der Strom um den eingestellten Wert (Hysterese) vermindert wird, schaltet die Schaltung 6 die Transistoren Q1 bzw. Q2 wieder ein.

Die Stromregelung mit Hysterese ermöglicht, auch bei sehr hohen Drehzahlen eine fast rechteckige Form des Stroms zu erreichen, was einen guten Wirkungsgrad und großen Drehmoment bei großen Drehzahlen des Elektromotors gewährleistet. Da man die Möglichkeit hat, den Strom mit Hysterese zu regeln, kann man damit die Form des Stroms durch die Statorwicklung mit der Form des Signals I2 bestimmen und so auf eine einfache Weise die Form des Stroms den Anforderungen einzelner Anwendungen anpassen.

Bei den meisten vorhandenen Lösungen wird der Strom mit der Pulsenweitemodulation geregelt. Dies gewährleistet eine einfache und zuverlässige Steuerung der Leistungstransistoren, es ermöglicht jedoch keine maximale Ausnützung des Elektromotors vor allem bei hohen Drehzahlen und großem Drehmoment.

Die Stromregelung mit Hysterese ermöglicht also eine einfache Einstellung des konstanten Drehmoments und verschiedene Formen des Drehmoments in Abhängigkeit von der Drehzahl des Elektromotors, was wieder einfache Anpassung der Charakteristiken des Elektromotors den Anforderungen verschiedener Anwendungen gewährleistet.

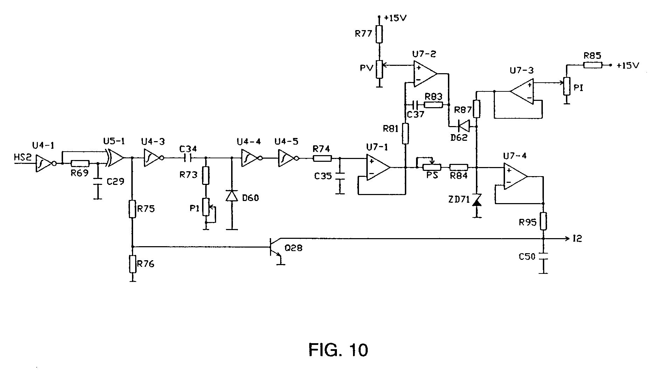

Auf der Fig. 10 wird die Schaltung zur Drehzahlregelung, Stromregelung in Abhängigkeit von der Drehzahl des Elektromotors und Geräuscheunterdrückung dargestellt.

In der Praxis gibt es oft Anwendungen, wenn das Drehmoment in Abhängigkeit von der Drehzahl des Elektromotors wechseln soll. Eine typische Anwendung ist der Ventilatorantrieb.

Zur Einstellung des Drehmoments in Abhängigkeit von der Drehzahl bedürft man des Drehzahl-Istwertes. Da eine große Polanzahl zur Verfügung steht, kann man eine ziemlich exakte Information über die Drehzahl auf folgende Weise bekommen: die positiven Pulse vom Ausgang U5-1, die bei den Umschaltungen der Sonde HS2 auftreten, führt man über Inverter U4-3 auf den Kondensator C34, dessen anderer Teil mit dem Widerstand R73 und Eingang U4-4 verbunden ist. Der Widerstand R73 ist auch an den Potentiometer P1 angeschlossen. C34, R73 und P1 bestimmen die Pulsenweite. Während der Pulsendauer wird C35 über R74 geladen, in der Zeit, wenn es keinen Puls gibt, wird C35 über R74 entladen. Mit der Steigerung der Drehzahl steigt die Pulsenzahl, wobei die Ladezeit länger und die Entladungszeit des Kondensators C35 kürzer wird. Die Gleichspannung des Kondensators C35 is also proportional zur Drehzahl des Elektromotors. Dieses Signal kann vom Einfluß anderer Lasten über Operationsverstärker U7-1, der die Verstärkung 1 besitzt, getrennt werden. Dieses Signal wird über Potentiometer PS und Widerstand R84 zum Operationsverstärker U7-4 geführt. Mit dem Potentiometer PI kann man den Strom-Sollwert einstellen. Dieser Strom-Sollwert führt man durch den Operationsverstärker U7-3 mit der Verstärkung 1 über R87 zum positiven Ausgang des Operationsverstärkers U7-4. Das Verhältnis des Widerstandswertes R87 im Vergleich zum Wert des Potentiometers PS und des Widerstandes R84 bestimmt den Einfluß der Drehzahl auf die Stromgröße. Der korrigierte Stromwert wird über Operationsverstärker U7-4 mit der Verstärkung 1 und über Widerstand R95 auf den Kondensator C50 und Eingang I2 der Schaltung 6, gemäß Fig. 7, geführt.

Da man Angaben über die Drehzahl hat, kann man auch die Drehzahl des Elektromotors regeln oder die maximale Drehzahl begrenzen. Mit Potentiometer PV wird die Drehzahl-Sollwert eingestellt und mit Operationsverstärker U7-2 werden der Drehzahl-Sollwert und Drehzahl-Istwert verglichen. Wenn der Drehzahl-Istwert und der Drehzahl-Sollwert gleich sind, begrenzt der Operationsverstärker U7-2 über Diode D62 den Strom auf einen solchen Wert, daß der Drehzahl-Sollwert und Drehzahl-Istwert gleich sind.

Die einfache Regelung des Drehmoments, der Drehzahl und des Drehmoments in Abhängigkeit von der Drehzahl gibt uns die Möglichkeit, den Antrieb auf eine höchst exakte Weise den Anforderungen einzelner Anwendungen anzupassen. Der erfindungsmäßige Elektromotor kann mit der beschriebenen Steuerung folgende Charakteristiken erzielen:

a) Drehzahlregelung - damit wird konstante Drehzahl unbeeinflußt von Elektromotorbelastungen erreicht (eine ähnliche Charakteristik ist auch beim Asynchronmotor zu finden)

b) die Regelung des Drehmoments bzw. des Stroms des Elektromotors - auf diese Weise geht die Drehzahl des Elektromotors auf den Wert, wenn der Lastmoment dem eingestellten Drehmoment des Elektromotors gleich wird. Ein Beispiel, wo solche Regelung benötigt wird, ist die Ventilationstechnik, bei der mit der Senkung des Widerstandes auf dem Ventilator auch der Lastmoment kleiner wird, darum vergrößert sich die Drehzahl auf den Wert, daß der Ventilatorlastmoment mit dem eingestellten Drehmoment des Elektromotors ausgeglichen wird. Auf diese Weise kann trotz erreichter Hochdrücken des Ventilators eine relativ kleine Volumenstromänderung erlangt werden.

c) die Regelung des Drehmoments bzw. des Stroms des Elektromotors in Abhängigkeit von der Drehzahl - in diesem Fall kann der Drehmoment des Elektromotors steigen oder senken in Abhängigkeit von der Drehzahl. Bei Ventilatoren wird oft die Charakteristik der Drehmomentsteigung in Übereinstimmung mit der Drehzahlsteigung gewünscht. Mit solcher Regelung erreicht der Ventilator den konstanten Volumenstrom unbeeinflußt vom Druck (z.B. wenn der Filter gestopft wird), den der System verlangt.

Der erfindungsmäßige Elektromotor kann also mit der beschriebenen Steuerung ohne speziellen Sensoren sehr verschiedene gewünschte Betriebscharakterstiken von Ventilatorsystemen erzielen. Wenn der Filter gestopft wird, vergrößert sich bei vorhandenen Ventilatorantrieben mit Asynchronmotor der Druck, wobei der Volumenstrom stark sinkt. Um einen konstanten Volumenstrom unbeeinflußt von Druckänderung mit dem Asynchronmotor erlangen zu können, braucht man die Frequenzregelung, Sensor zur Messung des Volumenstroms und die Schaltung, die mit Bezug auf Sensorsignale die Drehzahl regelt.

Bei niedrigen Drehzahlen kommt oft vor das Geräuscheproblem wegen schneller Steigung des Stroms. Die erfindungsmäige Lösung ermöglicht einfache Bestimmung bzw. Anpassung der Stromsteigung und damit geringeres Geräusch. Ähnliches Problem tritt bei Stromsenkung auf.

Die Schaltung zur Geräuscheunterdrückung wird auf die Weise gemäß Fig. 10 ausgeführt. Der Signal vom Ausgang U5-1 wird über den Widerstand R75 auf die Transistorbasis Q28 geführt. Der Transistorkollektor Q28 wird auf den Kondensator C50 geführt. Bei jeder Umschaltung der Sonde HS2 erscheint auf dem Ausgang U5-1 ein kurzer Impuls und während der Impulsedauer entladet der Transistor Q28 den Kondensator C50 auf die Spannung 0 Volt. Nach dem Schluß des Impulses beginnt die Spannung auf dem Kondensator C50 wieder zu steigen. Die Geschwindigkeit der Spannungsteigung wird durch den Wert des Kondensators C50 und des Widerstandes R95 festgelegt.

So kann die Geschwindigkeit der Stromsteigung mit der Umschaltung der Stromrichtung in der Wicklung beliebig begrenzt werden. Ähnlich könnte die Geschwindigkeit der Stromsenkung bei der Umschaltung der Stromrichtung in der Wicklung begrenzt werden, jedoch wird die Stromsenkung schon durch die Sequenz gemäß Fig. 8c bzw. 9c gewährleistet.

**Patentansprüche**

1. Elektronisch kommutierter Ein- oder Mehrphasen- Elektromotor, mit Stator und Rotor in Innen- oder Außenläufer-Ausführung, sowie Steuerelektronik,
   **dadurch gekennzeichnet,**
   daß der Stator (1) aus lamelliertem Blech besteht, in dessen Nuten (12) die Statorwicklung (4) so eingesetzt ist, daß die Phasenwicklungen einander nicht überdecken und jede Phase der Statorwicklung (4) an ihre eigene H Brücke angeschlossen ist, daß der Rotor (3) ein Weicheisenring oder ein Ring aus lamelliertem Blech ist, auf dem die Magneten oder ein Magnetring (2) befestigt sind, wobei Sonden (HS1, HS2, HS3) zur Bestimmung der Rotorposition gegenüber der Statorposition vorgesehen sind, daß die Polanzahl eine gerade Zahl ist und mindestens 6 beträgt, daß das Verhältnis zwischen Polanzahl und Rotordurchmesser (D), gemessen in cm, ungefähr konstant ist und je nach Ausführungsvariante des Elektromotors in etwa zwischen 0,6 und 2,0 liegt, und daß die Anzahl der Nuten (12) gleich der Anzahl der Statorpole (13) ist.

2. Elektronisch kommutierter Elektromotor nach Anspruch 1,
   **dadurch gekennzeichnet,**
   daß das Verhältnis zwischen der Breite des Ferritmagnetes (14) bzw. des Magnetpoles (L1) und seiner Dicke ungefähr zwischen 4 und 8 ist und daß die Größe des Ferritmagnetes (14) bzw. des Magnetpoles ungefähr konstant ist ohne Hinsicht auf die Größe des Elektromotors.

3. Elektronisch kommutierter Elektromotor nach Anspruch 1,
   **dadurch gekennzeichnet,**
   daß das Verhältnis zwischen der Breite des Magnetes aus seltenen Erden (14) bzw. des Magnetpoles (L1) und seiner Dicke ungefähr zwischen 10 und 40 liegt und daß die Magnetgröße (14) aus seltenen Erden bzw. des Magnetpoles ungefähr konstant ist ohne Hinsicht auf die Elektromotorgröße.

4. Elektronisch kommutierter Elektromotor nach Anspruch 1,
   **dadurch gekennzeichnet,**
   daß das Verhältnis zwischen der Breite des Magnetpoles (L1) und der Dicke des Rotorringes (L2) aus weichem Eisen oder lamelliertem Blech etwa konstant ist ohne Hinsicht auf den Rotordurchmesser.

5. Elektronisch kommutierter Elektromotor nach Anspruch 1,
   **dadurch gekennzeichnet,**
   daß sich die Durchmesser der äußersten linken und rechten Lage einzelner Statorpole auf solche Weise unterscheiden, daß der Durchmesser (D1) verschieden von Durchmesser (D2) ist, wobei der Übergang in Breiterichtung des Poles von einem Durchmesser auf den anderen kontinuierlich oder unkontinuierlich verändert wird oder daß die Durchmesser der einzelnen Statorpole in die ganze Breiterichtung gleich sind, so daß der Durchmesser (D1) dem Durchmesser (D2) gleich ist und daß sich die Durchmesser der äußersten linken und rechten Lage einzelner Rotorpole auf solche Weise unterscheiden, daß der Durchmesser (D3) verschieden von Durchmesser (D4) ist, wobei der Übergang in Breiterichtung des Poles von einem Durchmesser auf den anderen kontinuierlich oder unkontinuierlich verändert wird oder daß die Durchmesser der einzelnen Rotorpole in die ganze Breiterichtung gleich sind, so daß der Durchmesser (D3) dem Durchmesser (D4) gleich ist.

6. Elektronisch kommutierter Elektromotor nach Anspruch 1,
   **dadurch gekennzeichnet,**
   daß der Elektromotor kombinierte Poleformen hat, wobei bei einem Teil der Pole der Durchmesser in die Breiterichtung des ganzen Poles gleich ist, beim anderen Teil der Pole unterscheidet sich jedoch der Durchmesser (D1) vom Durchmesser (D2).

7. Elektronisch kommutierter Elektromotor nach Ansprüchen 1 bis 6,
   **dadurch gekennzeichnet,**
   daß als Einphasen-Elektromotor in Innen- oder Außenläufer-Ausführung, wobei der Stator des Elektromotors aus mehreren Statorpaketen (E1, E2 bis En bzw. E1', E2' bis En') und Magnetringen (F1, F2 bis Fn bzw. F1', F2' bis Fn') besteht, die untereinander parallel sind und deren Wicklungen parallel oder in der Reihe angeschlossen sind.

8. Elektronisch kommutierter Elektromotor nach Ansprüchen 1 bis 6,
   **dadurch gekennzeichnet,**
   daß als Einphasen-Elektromotor in Innen- oder Außenläufer-Ausführung, wobei der Stator des Elektromotors aus mehreren Statorpaketen (E1, E2 bis En bzw. E1', E2' bis En') und Magnetringen (F1, F2 bis Fn bzw. F1', F2' bis Fn') besteht, die untereinander parallel sind und deren Wicklungen parallel oder in der Reihe angeschlossen sind, wo die Statorpakete untereinander versetzt sind, wobei die Rotorringe untereinander gleich wie die Statorpakete versetzt sind.

9. Elektronisch kommutierter Elektromotor nach Ansprüchen 1 bis 6,
   **dadurch gekennzeichnet,**
   daß als Zwei- oder Mehrphasen-Elektromotor in Innen- oder Außenläufer-Ausführung, wobei der Stator des Elektromotors aus mehreren Statorpaketen (E1, E2 bis En bzw. E1', E2' bis En') und Magnetringen (F1, F2 bis Fn bzw. F1', F2' bis Fn') besteht, wobei die Magnetringe oder Statorpakete untereinander um die Polenbreite, durch die Phasenzahl geteilt, versetzt sind.

10. Elektronisch kommutierter Elektromotor nach Ansprüchen 1 bis 6,
    **dadurch gekennzeichnet,**
    daß als Zwei- oder Mehrphasen-Elektromotor mit einem Stator (11) ausgeführt wird, wo jede Phase mindestens zwei symmetrische Gruppen von Statorpole (10, 10') hat und ist die Zahl der Statorpole gerade, gleich oder größer als vier, multipliziert mit der Phasenzahl, und ist die Zahl der Rotorpole um mindestens zwei größer als die Zahl der Statorpole; daß der Abstand zwischen den Gruppen einzelner Phasen ungefähr gleich ist der durch die Phasenzahl geteilte Breite des Statorpols; daß der Durchschnitt des lamellierten Blech zwischen einzelnen Phasen vermindert wird.

11. Elektronisch kommutierter Elektromotor nach Ansprüchen 1 bis 10,
    **dadurch gekennzeichnet,**
    daß die Wicklung einzelner Phasen aus einer oder mehreren einzelnen Wicklungen (N1, N2, N3 bis Nn) besteht, die in Höherichtung der Statorpole eingereiht werden und in der Reihe, parallel oder als Kombination beider Ausführungen angeschlossen werden, oder daß die Statorwicklung aus mehreren einzelnen Wicklungen (M1, M2, M3 bis Mn) besteht, wo jeder Pol seine eigene Wicklung hat, die in der Reihe, parallel oder als Kombination beider Ausführungen angeschlossen werden.

12. Elektronisch kommutierter Elektromotor nach Ansprüchen 1 bis 11,
    **dadurch gekennzeichnet,**
    daß für beide Drehrichtungen bei jeder Phase die Sonde (HS2) in der Mitte zwischen zwei Statorpolen, die Sonde (HS1) links von der Sonde (HS2) und die Sonde (HS3) rechts von der Sonde (HS2) eingesetzt werden.

13. Elektronisch kommutierter Elektromotor nach Ansprüchen 1 bis 12,
    **dadurch gekennzeichnet,**
    daß bei Elektromotoren mit der rechten Drehrichtung bei jeder Phase die Sonde (HS2) in der Mitte zwischen zwei Statorpolen und die Sonde (HS1) links von der Sonde (HS2) eingesetzt werden und daß bei Elektromotoren mit der linken Drehrichtung bei jeder Phase die Sonde (HS2) in der Mitte zwischen zwei Statorpolen und die Sonde (HS3) links von der Sonde (HS2) eingesetzt werden.

14. Elektronisch kommutierter Elektromotor nach Ansprüchen 1 bis 12,
      **dadurch gekennzeichnet,**
      daß bei Elektromotoren mit der rechten Drehrichtung bei jeder Phase die Sonde (HS2) aus der Mitte gegen die Sonde (HS1) versetzt ist und daß bei Elektromotoren mit der linken Drehrichtung bei jeder Phase die Sonde (HS2) aus der Mitte gegen die Sonde (HS3) versetzt ist.

15. Elektronisch kommutierter Elektromotor mit der Schaltung zur Stromregelung in Abhängigkeit von der Drehzahl, nach Ansprüchen 1 bis 14,
      **dadurch gekennzeichnet,**
      daß der Drehzahl-Istwert vom Ausgang des Operationsverstärkers (U7-1) über Potentiometer (PS) und Widerstand (R84) zum positiven Eingang des Operationsverstärkers (U7-4) geführt wird und daß der eingestellte Stromwert vom Potentiometer (PI) zum positiven Eingang des Operationsverstärkers (U7-3) geführt wird und daß der negative Eingang des Operationsverstärkers (U7-3) mit dem Ausgang des Operationsverstärkers (U7-3) und Widerstand (R87) verbunden ist und daß der andere Teil des Widerstandes (R87) mit dem positiven Eingang des Operationsverstärkers (U7-4) verbunden ist und der negative Eingang des Operationsverstärkers (U7-4) mit dem Ausgang des Operationsverstärkers (U7-4) und Widerstand (R95) verbunden ist, dessen anderer Teil mit dem Kondensator (C50) verbunden ist; daß die Anschlußstelle des Widerstandes (R95) und des Kondensators (C50) an den Eingang (12) der Schaltung (6) zur Stromregelung angeschlossen ist.

16. Elektronisch kommutierter Elektromotor mit der Schaltung zur Geräuschesenkung nach Ansprüchen 1 bis 15,
      **dadurch gekennzeichnet,**
      daß die Ausgangsklemme der Sonde (HS2) an Eingang des Schmittriggers (U4-1) angeschlossen ist und daß der Ausgang des Schmittriggers (U4-1) mit einem Eingang des exklusiven OR-Gatter (U5-1) und über Widerstand (R69) an Kondensator (C29) und den zweiten Eingang des exklusiven OR-Gatter (U5-1) angeschlossen ist; daß der Ausgang des OR-Gatter (U5-1) über Widerstand (R75) an die Transistorbasis (Q28) und Widerstand (R76) und daß Kollektortransistor (Q28) an den Anschlußpunkt des Kondensators (C50) und Widerstandes

(R95) angeschlossen ist.

FIG. 1

FIG. 2a

FIG. 2b

FIG. 3a

FIG. 3b

FIG. 4a

FIG. 4b

F1′   F2′   Fn′

E1′   E2′   En′

FIG. 5a

F1   F2   Fn

E1   E2   En

FIG. 5b

FIG. 6

FIG. 7

FIG. 8a

FIG. 8b

FIG. 8c

FIG. 9a

FIG. 9b

FIG. 9c

FIG. 10

Europäisches
Patentamt

**EUROPÄISCHER RECHERCHENBERICHT**

Nummer der Anmeldung

EP 94 10 3139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | US-A-497 317 (FINEA)<br><br>* Spalte 3, Zeile 24 - Spalte 5, Zeile 30; Abbildungen 1-3 *<br>--- | 1,7-9, 12-14 | H02K29/06 |
| A | IEEE TRANSACTIONS ON INDUSTRY APPLICATIONS,<br>Bd.28, Nr.2, März 1992, NEW YORK US<br>Seiten 350 - 357, XP000291660<br>HIRO TAKANO ET AL 'optimum values for magnet and armature winding thickness for axial-field permanent magnet brushless dc motors'<br>--- | 1-3 | |
| A | WO-A-90 01823 (PACIFIC SCIENTIFIC COMPANY)<br>* Abbildungen 4C,8A *<br>----- | 10 | |

RECHERCHIERTE SACHGEBIETE (Int.Cl.5)

H02K

Der vorliegende Recherchenbericht wurde für alle Patentansprüche erstellt

| Recherchenort | Abschlußdatum der Recherche | Prüfer |
|---|---|---|
| DEN HAAG | 13. Juni 1994 | Zoukas, E |